# FASCICULE DE BREVET EUROPEEN

(11) **EP 3 423 213 B1**
(45) Date de publication et mention de la délivrance du brevet: **16.12.2020**
(21) Numéro de dépôt: 17712194.4
(22) Date de dépôt: 27.02.2017
(51) Int. Cl.: B22C 9/10, F01D 5/18, F01D 5/20

(54) **NOYAU POUR LE MOULAGE D'UNE AUBE DE TURBOMACHINE**
KERN ZUM FORMEN EINES TURBOMASCHINENBLATTES
CORE FOR MOULDING A TURBOMACHINE BLADE

(30) Priorité: 01.03.2016 FR 1651700
(43) Date de publication de la demande: 09.01.2019
(73) Titulaire: Safran Aircraft Engines, 75015 Paris (FR); Safran, 75015 Paris (FR)
(72) Inventeur: HUCHIN, Patrick, Emilien, Paul, Emile, 77550 Moissy-Crayamel (FR); VOLLEBREGT, Matthieu, Jean, Luc, 77550 Moissy-Crayamel (FR); ROLLINGER, Adrien, Bernard, Vincent, 77550 Moissy-Crayamel (FR); BECHELANY, Mirna, 77550 Moissy-Crayamel (FR)
(74) Mandataire: Brevalex
(86) Numéro de dépôt international: PCT/FR2017/050423
(87) Numéro de publication internationale: WO 2017/149229

(56) Documents cités:
- EP-A1- 1 637 253
- EP-A2- 2 071 126
- WO-A2-2013/093352
- WO-A2-2013/167847
- FR-A1- 2 986 982

## Description

### DOMAINE TECHNIQUE

L'invention concerne la fabrication d'une aube de moteur d'aéronef de type turbomachine, tel qu'un turboréacteur ou un turbopropulseur.

### ETAT DE LA TECHNIQUE ANTERIEURE

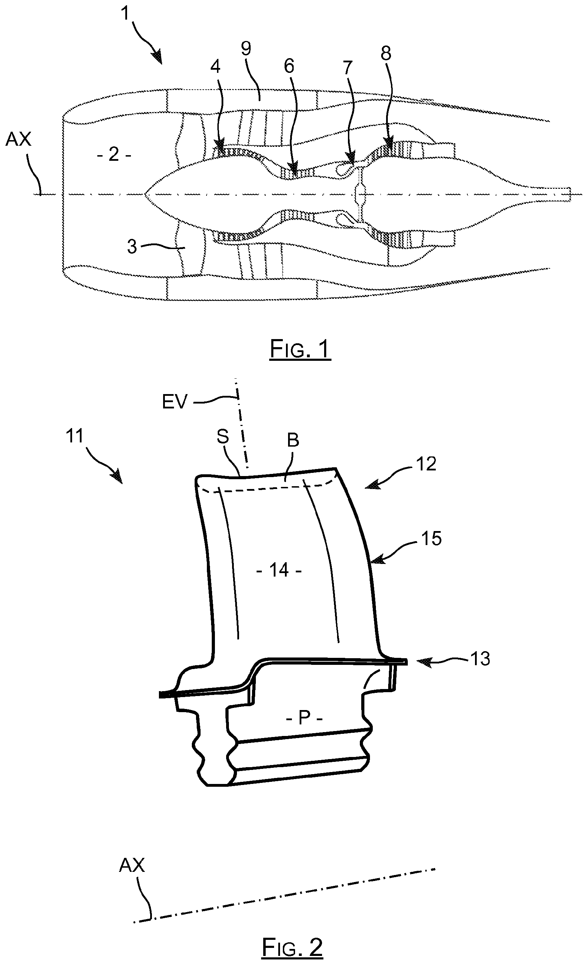

Dans un tel moteur de type turboréacteur, repéré par 1 dans la figure 1, l'air est admis dans une manche d'entrée 2 pour traverser une soufflante comportant une série de pales rotatives 3 avant de se scinder en un flux primaire central et un flux secondaire entourant le flux primaire.

Le flux primaire est compressé par des compresseur basses pressions 4 et haute pression 6 avant d'atteindre une chambre de combustion 7, après quoi il se détend en traversant des turbines 8, avant d'être évacué en générant une poussée. Le flux secondaire est quant à lui propulsé directement par la soufflante pour générer une poussée complémentaire.

Chaque turbine 8 comporte des séries d'aubes orientées radialement et régulièrement espacées autour d'un arbre de rotation AX, un carter externe 9 entourant l'ensemble du moteur.

Le refroidissement des aubes est assuré en faisant circuler dans chaque aube de l'air prélevé en amont de la combustion et admis en pied d'aube, cet air étant évacué par des perçages traversant les parois de ces aubes.

Une telle aube, qui est repérée par 11 sur la figure 2, comprend un pied P par lequel elle est fixée à un corps rotatif, et une pale 12 portée par ce pied P, une plateforme 13 étant située au niveau du raccordement du pied et de la pale.

La pale 12 a une forme gauche vrillée autour d'un axe EV dit axe d'envergure qui est perpendiculaire à l'axe AX. Elle comprend une base par laquelle elle est raccordée à la plateforme 13 et qui se prolonge radialement jusqu'à un sommet S qui est l'extrémité libre de cette pale. Les deux parois principales de la pale sont sa paroi d'intrados 14 et sa paroi d'extrados non visible sur la figure 2, qui sont espacées l'une de l'autre dans leur portion courante et qui se réunissent au niveau du bord de fuite 15.

Le sommet S de l'aube 11 comporte une paroi de fermeture perpendiculaire à la direction EV, et qui raccorde les parois d'intrados et d'extrados. Cette paroi de fermeture non visible sur la figure 2 est en retrait vers l'axe AX par rapport aux bords libre des parois d'intrados et d'extrados. Elle délimite conjointement avec ces bords une portion creuse ouverte en direction opposée à l'axe AX, appelée baignoire représentées schématiquement en traits discontinus et repérée par B, qui est située en tête de l'aube c'est-à-dire au niveau de son sommet.

Les besoins accrus en performances conduisent à optimiser le refroidissement de l'aube qui est assuré par circulation d'air dans des cavités et canaux internes de cette aube. Cette optimisation conduit à multiplier le nombre des cavités et de canaux internes, ce qui donne lieu à des formes géométriques imbriquées pouvant être complexes.

Afin d'assurer que le refroidissement ne puisse pas être dégradé, chaque cavité interne est reliée à l'extérieur par au moins un trou de dépoussiérage pour évacuer d'éventuelles poussières afin qu'elles n'obstruent pas la circulation d'air, comme par exemple dans le cas de l'aube que divulgue le document FR2986982. Ce document décrit un noyau pour le moulage d'une aube de turbomachine, cette aube comprenant une pale s'étendant selon une direction d'envergure et se terminant par un sommet, ce noyau comprenant un premier élément de noyau pour délimiter une première cavité interne de l'aube et un second élément de noyau dont au moins une portion délimite une seconde cavité, externe, de l'aube, ces éléments de noyaux étant rigidement solidarisés l'un à l'autre, la seconde cavité étant située entre la première cavité et le sommet de l'aube le long de la direction d'envergure, et dans lequel la portion du second élément de noyau qui délimite la seconde cavité comprend un trou traversant orienté selon la direction d'envergure, et qui débouche au droit d'une face d'extrémité du premier élément de noyau, une tige d'alumine s'étendant à l'intérieur du trou traversant en étant fixée à la face d'extrémité du premier élément de noyau.

L'objet de l'invention est d'apporter un procédé de fabrication permettant de réaliser une grande variété de formes de cavités internes tout en assurant leur dépoussiérage.

### EXPOSÉ DE L'INVENTION

A cet effet, l'invention a pour objet un noyau pour le moulage d'une aube de turbomachine, cette aube comprenant une pale s'étendant selon une direction d'envergure et se terminant par un sommet, ce noyau comprenant un premier élément de noyau pour délimiter une première cavité interne de l'aube et un second élément de noyau dont au moins une portion délimite une seconde cavité interne de l'aube, ces éléments de noyaux étant rigidement solidarisés l'un à l'autre, la seconde cavité étant située entre la première cavité et le sommet de l'aube le long de la direction d'envergure, et dans lequel :
- la portion du second élément de noyau qui délimite la seconde cavité comprend un trou traversant orienté selon la direction d'envergure, et qui débouche au droit d'une face d'extrémité du premier élément de noyau pour délimiter dans l'aube moulée une face externe d'un conduit de dépoussiérage de la première cavité, ce conduit traversant la seconde cavité de part en part en débouchant dans le sommet de l'aube ;
- une tige d'alumine de diamètre inférieur au diamètre du trou traversant, et s'étendant à l'intérieur du trou traversant en étant fixée à la face d'extrémité du premier élément de noyau, pour délimiter la face interne du conduit de dépoussiérage ;
- des moyens de centrage interposés entre la tige et le trou traversant pour centrer cette tige par rapport au trou, ces moyens de centrage étant en un matériau destiné à être dissous avant de procéder au coulage de l'aube autour dudit noyau.

Avec cet agencement, la position et l'orientation de la tige et du trou traversant sont directement couplées, de sorte que le trou et la tige présentent nécessairement une coaxialité optimale. Le conduit de dépoussiérage délimité par ce trou et cette tige présente alors nécessairement une épaisseur suffisante et régulière. Cet agencement permet ainsi de former un conduit de dépoussiérage traversant une cavité, pour dépoussiérer une autre cavité ou canal couverte par la cavité traversée par ce conduit.

L'invention a également pour objet un noyau ainsi défini, dans lequel les moyens de centrage sont formés par une gaine entourant la tige sur au moins une portion de longueur de cette tige.

L'invention a également pour objet un noyau ainsi défini, dans lequel la gaine est fabriquée en un matériau de type polymère organique.

L'invention a également pour objet un noyau ainsi défini, dans lequel le trou traversant est situé dans une région centrale de la portion du second élément de noyau qui délimite la seconde cavité, pour être espacé de chaque face latérale de cet élément de noyau afin de constituer dans l'aube terminée un obstacle divisant en deux flux latéraux l'air circulant dans la seconde cavité.

L'invention a également pour objet un noyau ainsi défini, comprenant un trou traversant qui longe une face latérale de la portion du second élément de noyau délimitant la seconde cavité, en étant ouvert dans cette face latérale, afin de constituer dans l'aube terminée un conduit longeant intérieurement une paroi latérale de l'aube.

L'invention a également pour objet un noyau ainsi défini, dans lequel le premier élément de noyau est agencé pour délimiter un canal de refroidissement d'un bord de fuite de l'aube, et dans lequel le second élément de noyau est agencé pour délimiter une cavité sous baignoire de l'aube.

L'invention a également pour objet procédé de fabrication d'un noyau ainsi défini, comprenant une étape de positionnement de la tige avec sa gaine dans un ensemble de moulage par injection des éléments de noyau, et une étape d'injection des éléments de noyau dans l'ensemble de moulage lorsque la tige est en place dans cet ensemble.

### BRÈVE DESCRIPTION DES DESSINS

La figure 1 déjà décrite est une vue d'ensemble d'un turboréacteur à double flux représenté en coupe selon un plan de coupe longitudinal ;
La figure 2 déjà décrite est une vue d'ensemble d'une aube de turboréacteur;
La figure 3 est une représentation schématique d'une partie d'un noyau selon l'invention avec sa tige d'alumine et sa gaine de centrage ;
La figure 4 est une vue en perspective d'un noyau selon l'invention avec sa tige d'alumine et sa gaine de centrage ;
La figure 5 est une autre vue en perspective d'un noyau selon l'invention avec sa tige d'alumine une fois que la gaine de centrage a été retirée ;
La figure 6 est une vue en section selon un plan transversal à la direction d'envergure d'une aube obtenue avec le noyau selon l'invention.
La figure 7 est une vue en perspective d'une variante de noyau selon l'invention avec sa tige d'alumine une fois que la gaine de centrage a été retirée ;
La figure 8 est une vue en section selon un plan transversal à la direction d'envergure d'une aube obtenue avec la variante de noyau selon l'invention.

### EXPOSÉ DÉTAILLÉ DE MODES DE RÉALISATION PARTICULIERS

La base de l'invention est de prévoir une cavité sous baignoire située entre le fond de baignoire et l'extrémité d'un canal de refroidissement du bord de fuite de l'aube, alimentée par un canal et traversée par un conduit de dépoussiérage du canal de refroidissement du bord de fuite.

Le conduit de dépoussiérage traverse la cavité sous baignoire en débouchant dans le fond de la baignoire pour dépoussiérer le canal de refroidissement du bord de fuite.

Cette cavité sous baignoire refroidit efficacement le sommet d'aube que constitue le fond de la baignoire, tout en permettant grâce au conduit qui la traverse le dépoussiérage indépendant du canal de refroidissement du bord de fuite dont elle couvre l'extrémité.

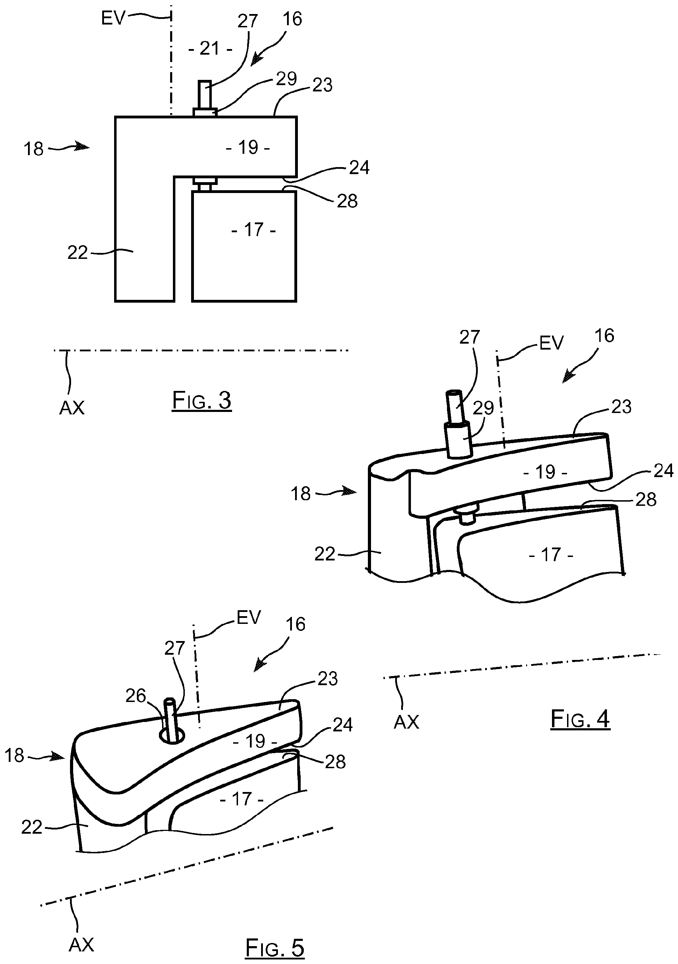

Comme visible sur les figures 3 et 4, un noyau 16 selon l'invention pour fabriquer une aube comprenant une cavité sous baignoire recouvrant l'extrémité d'un canal de refroidissement de son bord de fuite, comporte un élément de noyau aval 17, et un élément de noyau amont 18. L'élément de noyau aval 17 délimite le canal de refroidissement, et l'élément de noyau amont 18 délimite la cavité sous baignoire.

Comme on l'aura compris, les termes amont et aval sont utilisés par rapport au sens d'écoulement du fluide dans le turboréacteur, en particulier autour de l'aube moulée en service.

L'élément aval 17 a une forme généralement allongée qui s'étend selon une direction d'envergure EV de la pale de cette aube, depuis sa base jusqu'à une région proche de son sommet.

L'élément amont 18 comporte une portion supérieure 19 s'étendant entre l'extrémité du noyau aval 17 et l'emplacement 21 d'une baignoire non représentée qui est située en sommet d'aube. Cet élément 18 délimite ainsi la cavité sous baignoire, et une portion 22 d'alimentation de cette cavité sous baignoire, cette portion d'alimentation 22 s'étendant selon la direction d'envergure EV, perpendiculairement à la portion supérieure 19.

Comme visible sur les figures 3 et 4, la portion d'alimentation 22 est située en amont de l'élément aval 17 par rapport au sens d'écoulement du fluide, la cavité sous baignoire étant alimentée en air de refroidissement par le canal dédié que délimite cette portion 22. La cavité sous baignoire reçoit de fait un air frais pour refroidir efficacement le fond de la baignoire, c'est-à-dire le sommet de l'aube.

La portion 19 de l'élément de noyau amont, qui est espacée de l'extrémité libre de l'élément de noyau aval 17 le long de l'axe d'envergure EV comporte une face supérieure 23 et une face inférieure 24 opposées le long de la direction d'envergure et d'orientation sensiblement normale à cet axe.

La face 24 correspond, une fois l'aube moulée, à la face inférieure du fond de la baignoire située à l'emplacement 21, et la face 23 correspond à celle qui est en vis-à-vis de la face délimitant l'extrémité libre de l'élément de noyau aval 17.

La portion 19 de l'élément de noyau amont 18 est traversée par un trou 26, visible sur la figure 5, dont l'orientation correspond sensiblement à celle de la direction d'envergure EV, pour mettre en communication les faces supérieure 23 et inférieure 24 de cette portion 19.

Le trou 26 délimite, dans l'aube moulée, la face externe cylindrique d'un conduit tubulaire mettant directement en communication le canal aval que délimite l'élément de noyau 17, avec le fond de baignoire, c'est-à-dire le sommet de l'aube.

La face interne cylindrique de ce conduit est délimitée par une tige d'alumine 27 portée par le noyau en étant notamment fixée ou encastrée dans la face supérieure 28 de l'élément 17. Cette face supérieure 28 est la face d'extrémité de l'élément 17 : elle est située en vis-à-vis de la face inférieure 24 de la portion 19.

Le conduit de dépoussiérage du canal aval de l'aube, une fois qu'elle a été formée, a ainsi une forme généralement tubulaire délimitée par une face externe et une face interne toutes deux cylindriques et coaxiales.

Selon l'invention, la coaxialité des faces externe et interne cylindriques, assurant que le conduit a une épaisseur suffisante en tous points, est améliorée en centrant directement la tige d'alumine 27 dans le trou 26 grâce à une gaine tubulaire 29 qui est portée par la tige 27. Le diamètre interne de cette gaine 29 correspond au diamètre externe de la tige, et le diamètre externe de cette gaine correspond au diamètre interne du trou 26.

Durant la fabrication du noyau 16, la tige 27 avec la gaine 29 qu'elle porte est placée et maintenue en position dans un ensemble de moulage par injection du noyau 16. Cette tige 27 est alors maintenue par exemple par son extrémité opposée à l'extrémité de cette tige 27 s'encastrant dans la face supérieure 28 de l'élément de noyau 17.

L'injection des éléments 17 et 18 du noyau 16 est alors déclenchée, ce qui forme alors ces éléments, tout en encastrant une extrémité de la tige 27 dans la face supérieure de l'élément 17 et en formant le trou 26 dans la portion 19, autour de la gaine 29.

Dans ces conditions, la tige 27 est nécessairement centrée de façon idéale par rapport au trou 26, puisque celui-ci a été formé autour de la gaine 29. Ainsi, en cas de décalage sensible de la tige par rapport à sa position idéale lorsqu'elle est mise en place préalablement à l'injection, ce décalage n'a pas d'incidence sur son centrage par rapport au trou 26 qui l'entoure. Un écart de positionnement de la tige ne peut donc pas engendrer une réduction de l'épaisseur du conduit par endroit, ce qui évite une mise au rebut de l'aube pour ce motif.

La gaine de centrage 29 est fabriquée dans un matériau prévu pour être détruit avant utilisation du noyau pour mouler l'aube. Cette destruction est assurée par exemple avec un processus de dégradation ou d'attaque chimique, ou avec un procédé de dégradation thermique par exemple par fusion.

Autrement dit, la gaine de centrage 29 qui est utilisée pour centrer la tige 27 dans le trou 26 pour la fabrication du noyau est retirée avant mise en oeuvre effective de ce noyau pour constituer une aube.

La composition de la matière enrobante formant la gaine 29 comprend principalement un polymère organique. Cette gaine 29 peut être rapportée sur la tige par un procédé additif, par injection, par usinage d'un bloc, ou tout autre procédé approprié.

Par ailleurs, dans l'exemple ci-dessus, la portion 19 de noyau est formée par injection autour de la gaine 29, au cours d'une opération d'injection dans laquelle l'élément de noyau 17 est également formé. Mais d'autres mises en œuvre de l'invention sont également possibles. E

Notamment, le noyau 18 peut être fabriqué avec sa portion 19 dans une opération préalable, en y formant le trou 26. La tige 27 avec sa gaine 29 est alors insérée dans le trou 26 formé dans la portion 19. Ces composants sont alors mis en place dans un ensemble de moulage pour injection du premier noyau 17 dans lequel s'encastre l'extrémité de la tige 27.

Pour que la tige 27 ne risque pas de se décentrer de façon excessive au cours d'opérations réalisées après retrait de la gaine 29, comme des opérations de déliantage ou de frittage susceptibles de déplacer les composants formant le noyau, plusieurs mesures peuvent être prévues.

La gaine 29 peut être dimensionnée avec une épaisseur suffisante pour que les déplacements possibles ne puissent pas conduire à une épaisseur trop faible du conduit. On peut aussi utiliser des compositions du noyau qui réduisent ces déplacements : par exemple, l'utilisation de polymères thermodurcissables dans la composition céramique du noyau permet de supprimer de tels déplacements. De plus, un avantage dudit polymère thermodurcissable avec la céramique est la stabilité lors du retrait de la gaine par exemple par chauffage ce cette dernière.

L'espace qui est délimité par le trou 26 et par la tige 27, après retrait de la gaine 29, permet ainsi de délimiter directement lors de l'opération de moulage de l'aube, tout le conduit tubulaire de dépoussiérage traversant la cavité sous baignoire.

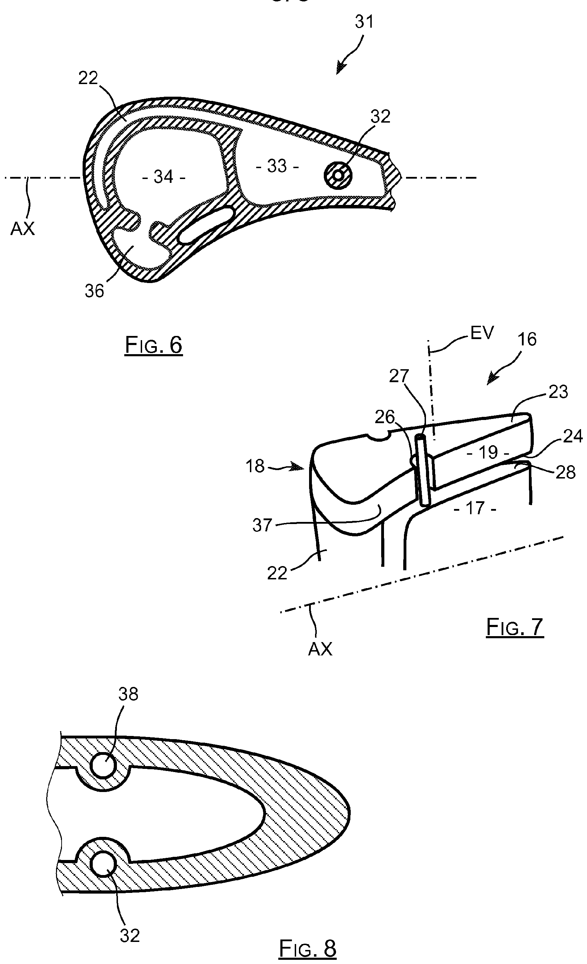

Dans l'aube moulée ainsi obtenue, qui est visible sur la figure 6 où elle est repérée par 31, le conduit de dépoussiérage qui est repéré par 32, traverse de part en part la cavité sous baignoire repérée par 33 et délimitée par la portion 19 de l'élément de noyau 18.

Ce conduit 32 peut alors, comme dans l'exemple de la figure 6, être centré dans la cavité sous baignoire 33, pour former en outre dans cette cavité un obstacle central qui divise le flux d'air en deux moitiés longeant chacune une des faces latérales de cette cavité 33. Ceci accroît l'efficacité du refroidissement.

On notera que dans la vue en section que constitue la figure 6, le conduit situé sous la cavité sous baignoire et délimité par l'élément de noyau 17 n'apparaît pas compte tenu de l'orientation de cette vue. Par ailleurs, cette vue est celle d'une aube ayant une forme sensiblement différente de celle formée avec le noyau de la figure 4 ou 5. Ainsi, cette vue concerne une aube comprenant en outre un autre canal 34 d'alimentation d'une rampe amont 36 dédiée au refroidissement du bord d'attaque de cette aube.

Par ailleurs, le trou traversant 26 qui s'étend en partie centrale de la cavité sous baignoire dans le mode de réalisation des figures 4 à 6 peut aussi être déporté latéralement, comme illustré sur la variante des figures 7 et 8.

Dans ce cas, le trou 26 s'étend de la face supérieure 23 à la face inférieure 24 de la portion 19 de l'élément de noyau 18, mais en longeant une face latérale 37 de ce noyau, qui délimite ici la face intérieure de la paroi d'intrados de l'aube.

Comme représenté sur la figure 7, le trou 26 peut alors à la fois s'étendre de la face 23 à la face 24 dans lesquelles il débouche tout en s'ouvrant sur toute sa hauteur dans la face latérale 37, ce trou 26 ayant alors une forme d'encoche formée dans la face 37 de la portion 19 et s'étendant parallèlement à la diretion EV.

Dans ces conditions, le conduit de dépoussiérage délimité par ce trou 26 traverse la seconde cavité de part en part en débouchant dans le sommet de l'aube, tout en longeant la paroi d'intrados, comme illustré sur la figure 8 où ce conduit latéral est repéré par 32.

De manière analogue, un autre trou 38 peut être formé le long de la face opposée de la portion 19, à savoir celle délimitant la face interne de la paroi d'extrados de l'aube, pour délimiter un autre conduit du même type, mais qui longe la paroi d'extrados, comme illustré schématiquement sur la figure 8 où cet autre conduit est repéré par 38.

## Revendications

1. Noyau (16) pour le moulage d'une aube de turbomachine, cette aube comprenant une pale s'étendant selon une direction d'envergure (EV) et se terminant par un sommet, ce noyau (16) comprenant un premier élément de noyau (17) pour délimiter une première cavité interne de l'aube et un second élément de noyau (18) dont au moins une portion (19) délimite une seconde cavité interne de l'aube, ces éléments de noyaux (17, 18) étant rigidement solidarisés l'un à l'autre, la seconde cavité étant située entre la première cavité et le sommet de l'aube le long de la direction d'envergure (EV), et dans lequel :
- la portion (19) du second élément de noyau (18) qui délimite la seconde cavité comprend un trou traversant (26) orienté selon la direction d'envergure (EV), et qui débouche au droit d'une face d'extrémité (28) du premier élément de noyau (17) pour délimiter dans l'aube moulée une face externe d'un conduit de dépoussiérage (32) de la première cavité, ce conduit (32, 38) traversant la seconde cavité (33) de part en part en débouchant dans le sommet de l'aube ;
- une tige d'alumine (27) de diamètre inférieur au diamètre du trou traversant (26), et s'étendant à l'intérieur du trou traversant (26) en étant fixée à la face d'extrémité (28) du premier élément de noyau (17), pour délimiter la face interne du conduit (32, 38) ;
- des moyens de centrage (29) interposés entre la tige (27) et le trou traversant (26) pour centrer cette tige par rapport au trou (26), ces moyens de centrage (29) étant en un matériau destiné à être dissous avant de procéder au coulage de l'aube autour dudit noyau (16).

2. Noyau (16) selon la revendication 1, dans lequel les moyens de centrage (29) sont formés par une gaine entourant la tige (27) sur au moins une portion de longueur de cette tige (27).

3. Noyau (16) selon la revendication 2, dans lequel la gaine (29) est fabriquée en un matériau de type polymère organique.

4. Noyau (16) selon l'une des revendications précédentes, dans lequel le trou (26) traversant est situé dans une région centrale de la portion (19) du second élément de noyau (18) qui délimite la seconde cavité, pour être espacé de chaque face latérale de cet élément de noyau (18) afin de constituer dans l'aube terminée un obstacle divisant en deux flux latéraux l'air circulant dans la seconde cavité.

5. Noyau (16) selon l'une des revendications précédentes, comprenant un trou traversant (26) qui longe une face latérale (37) de la portion (19) du second élément de noyau (18) délimitant la seconde cavité, en étant ouvert dans cette face latérale (37), afin de constituer dans l'aube terminée un conduit longeant intérieurement une paroi latérale de l'aube.

6. Noyau (16) selon l'une des revendications précédentes, dans lequel le premier élément de noyau (17) est agencé pour délimiter un canal de refroidissement d'un bord de fuite de l'aube, et dans lequel le second élément de noyau (18) est agencé pour délimiter une cavité sous baignoire de l'aube.

7. Procédé de fabrication d'un noyau (16) selon la revendication 2, comprenant une étape de positionnement de la tige (27) avec sa gaine (29) dans un ensemble de moulage par injection des éléments de noyau (17, 18), et une étape d'injection des éléments de noyau (17, 18) dans l'ensemble de moulage lorsque la tige (27) est en place dans cet ensemble.

8. Procédé de fabrication par moulage d'une aube de turbomachine, utilisant un noyau (16) selon l'une des revendications 1 à 6.

## Patentansprüche

1. Kern (16) zum Formen einer Turbomaschinenschaufel, wobei diese Schaufel ein Blatt umfasst, das sich in einer Spannweitenrichtung (EV) erstreckt, und mit einer Spitze endet, wobei dieser Kern (16) ein erstes Kernelement (17), um einen ersten inneren Hohlraum der Schaufel zu begrenzen, sowie ein zweites Kernelement (18) umfasst, von welchem wenigstens ein Abschnitt (19) einen zweiten inneren Hohlraum der Schaufel begrenzt, wobei diese Kernelemente (17, 18) auf starre Weise fest miteinander verbunden sind, wobei der zweite Hohlraum zwischen dem ersten Hohlraum und der Spitze der Schaufel entlang der Spannweitenrichtung (EV) gelegen ist, und wobei:
- der Abschnitt (19) des zweiten Kernelements (18), der den zweiten Hohlraum begrenzt, ein Durchgangsloch (26) umfasst, das in der Spannweitenrichtung (EV) ausgerichtet ist und senkrecht zu einer Endseite (28) des ersten Kernelements (17) ausmündet, um in der geformten Schaufel eine Außenseite eines Staubabscheidekanals (32) des ersten Hohlraums zu begrenzen, wobei dieser Kanal (32, 38) den zweiten Hohlraum (33) vollkommen durchquert und dabei in der Spitze der Schaufel ausmündet;
- eine Aluminiumoxidstange (27), die einen Durchmesser aufweist, der kleiner als der Durchmesser des Durchgangslochs (26) ist, sich innerhalb des Durchgangslochs (26) erstreckt und dabei an der Endseite (28) des ersten Kernelements (17) befestigt ist, um die Innenseite des Kanals (32, 38) zu begrenzen;
- Zentriermittel (29), zwischen der Stange (27) und dem Durchgangsloch (26) angeordnet sind, um diese Stange in Bezug auf das Loch (26) zu zentrieren, wobei diese Zentriermittel (29) aus einem Material bestehen, das dazu bestimmt ist, gelöst zu werden, bevor das Gießen der Schaufel um den Kern (16) herum vollzogen wird.

2. Kern (16) nach Anspruch 1, bei dem die Zentriermittel (29) durch eine Hülle gebildet sind, welche die Stange (27) über wenigstens einen Längenabschnitt dieser Stange (27) umgibt.

3. Kern (16) nach Anspruch 2, bei dem die Hülle (29) aus einem Material vom Typ organisches Polymer gefertigt ist.

4. Kern (16) nach einem der vorhergehenden Ansprüche, bei dem das Durchgangsloch (26) in einem mittleren Bereich des Abschnitts (19) des zweiten Kernelements (18) gelegen ist, der den zweiten Hohlraum begrenzt, um von jeder Seitenfläche dieses Kernelements (18) beabstandet zu sein, um in der fertigen Schaufel ein Hindernis zu bilden, das die in dem zweiten Hohlraum zirkulierende Luft in zwei seitliche Ströme teilt.

5. Kern (16) nach einem der vorhergehenden Ansprüche, umfassend ein Durchgangsloch (26), das sich entlang einer Seitenfläche (37) des Abschnitts (19) des zweiten Kernelements (18), welcher den zweiten Hohlraum begrenzt, erstreckt und dabei in dieser Seitenfläche (37) offen ist, um in der fertigen Schaufel einen Kanal zu bilden, der innen entlang einer Seitenwand der Schaufel verläuft.

6. Kern (16) nach einem der vorhergehenden Ansprüche, bei dem das erste Kernelement (17) dazu eingerichtet ist, einen Kühlkanal einer Hinterkante der Schaufel zu begrenzen, und bei dem das zweite Kernelement (18) dazu eingerichtet ist, einen Hohlraum unter der Wanne der Schaufel zu begrenzen.

7. Verfahren zur Herstellung eines Kerns (16) nach Anspruch 2, umfassend einen Schritt des Positionierens der Stange (27) mit ihrer Hülle (29) in einer Anordnung zum Spritzgießen der Kernelemente (17, 18), sowie einen Schritt des Einspritzens der Kernelemente (17, 18) in die Gießanordnung, wenn die Stange (27) in dieser Anordnung platziert ist.

8. Verfahren zur Herstellung einer Turbomaschinenschaufel durch Formen unter Verwendung eines Kerns (16) nach einem der Ansprüche 1 bis 6.

## Claims

1. Core (16) for the moulding of a turbine engine blade, this blade comprising a blade extending along a spanwise direction (EV) and ending with a peak, **characterized in that** this core (16) comprises a first core element (17) to delimit a first inner cavity of the blade and a second blade element (18) of which at least one portion (19) delimits a second inner cavity of the blade, these core elements (17, 18) being rigidly connected to each other, the second cavity being situated between the first cavity and the peak of the blade along the spanwise direction (EV), and wherein:
- the portion (19) of the second core element (18) which delimits the second cavity comprises a through bore (26) oriented along the spanwise direction (EV), and which leads to the right of an end face (28) of the first core element (17) to delimit in the moulded blade, an outer face of a dust removal conduit (32) of the first cavity, this conduit (32, 38) crossing the second cavity (33) from one end to the other by leading to the peak of the blade;
- an alumina rod (27) with a diameter less than the diameter of the through bore (26), and extending inside the through bore (26) by being fixed to the end face (28) of the first core element (17), to delimit the inner face of the conduit (32, 38);
- centring means (29) interposed between the rod (27) and the through bore (26) to centre this rod with respect to the hole (26), these centring means (29) being made of a material intended to be dissolved before proceeding with casting the blade around said core (16).

2. Core (16) according to claim 1, wherein the centring means (29) are formed by a sheath surrounding the rod (27) over at least one portion of length of this rod (27).

3. Core (16) according to claim 2, wherein the sheath (29) is made of an organic polymer type material.

4. Core (16) according to one of the preceding claims, wherein the through bore (26) is situated in a central region of the portion (19) of the second core element (18) which delimits the second cavity, to be spaced from each side face of this core element (18) in order to constitute in the ended blade, an obstacle splitting the air circulating in the second cavity into two side flows.

5. Core (16) according to one of the preceding claims, comprising a through bore (26) which borders a side face (37) of the portion (19) of the second core element (18) delimiting the second cavity, by being open in this side face (37), in order to constitute a conduit bordering inside a side wall of the blade, in the ended blade.

6. Core (16) according to one of the preceding claims, wherein the first core element (17) is arranged to delimit a cooling channel of a trailing edge of the blade, and wherein the second core element (18) is arranged to delimit an under-bath cavity of the blade.

7. Method for producing a core (16) according to claim 2, comprising a step of positioning the rod (27) with the sheath (29) thereof in a moulding unit by injecting the core elements (17, 18), and a step of injecting the core elements (17, 18) into the moulding unit when the rod (27) is in place in this unit.

8. Turbine engine blade obtained with the core according to one of claims 1 to 6.
